Europäisches Patentamt

European Patent Office

Office européen des brevets

(19)

(11) Veröffentlichungsnummer: **0 171 470 B1**

# (12) EUROPÄISCHE PATENTSCHRIFT

(45) Veröffentlichungstag der Patentschrift: **14.08.91**

(51) Int. Cl.⁵: **H04B 3/02**, H04L 12/10

(21) Anmeldenummer: **84116473.4**

(22) Anmeldetag: **28.12.84**

(54) **Einrichtung zur Speisung von Sendern und Empfängern eines Signalübertragungssystems.**

(30) Priorität: **17.08.84 DE 3430337**

(43) Veröffentlichungstag der Anmeldung:
**19.02.86 Patentblatt 86/08**

(45) Bekanntmachung des Hinweises auf die
Patenterteilung:
**14.08.91 Patentblatt 91/33**

(84) Benannte Vertragsstaaten:
**DE FR GB IT NL**

(56) Entgegenhaltungen:
**DE-A- 2 360 363**
**DE-A- 2 501 311**
**FR-A- 2 342 600**
**GB-A- 2 062 998**
**US-A- 4 435 764**

(73) Patentinhaber: **Siemens Nixdorf Informationssysteme Aktiengesellschaft
Fürstenallee 7
W-4790 Paderborn(DE)**

(72) Erfinder: **Laue, Hans-Bodo
Eggering 60
W-4791 Altenbeken(DE)**

(74) Vertreter: **Schaumburg, Thoenes & Englaender
Mauerkircherstrasse 31 Postfach 86 07 48
W-8000 München 86(DE)**

**Beschreibung**

Die Erfindung betrifft eine Einrichtung zur Speisung von Sendern und Empfängern nach dem Oberbegriff des Patentanspruchs 1. Eine solche Einrichtung ist aus der US-A-4 435 764 bekannt.

Bei den meisten gebräuchlichen Signalübertragungssystemen ist der mit der Übertragungsleitung verbundene leitungsseitige Teil des jeweiligen Senders und Empfängers von der Betriebsseite, an der ein zu übertragendes Datensignal anliegt bzw. empfangen wird galvanisch entkoppelt, da dadurch eine hohe Störsicherheit der Datenübertragung gewährleistet ist. Dies hat zur Folge, daß der leitungsseitige Teil des Senders und des Empfängers einer jeweiligen Sende- und Empfangsstation auch von der Betriebsseite galvanisch getrennt mit Spannung versorgt werden muß.

Die eingangs genannte bekannte Einrichtung ist für ein aus mehreren Arbeitsplätzen bestehendes Rechnernetz vorgesehen. Jeder Arbeitsplatz enthält einen Sender, einen Empfänger und einen Betriebsteil. Der Sender und der Empfänger sind mit der Übertragungsleitung verbunden und jeweils von dem Betriebsteil durch einen Optotrennschalter entkoppelt. Der Betriebsteil und einer der Optotrennschalter werden durch eine erste und der Sender und der Empfänger sowie der zweite Optotrennschalter werden durch eine zweite Stromversorgung gespeist. Diese Art der Speisung ist sehr aufwendig und bedarf insofern einer Verbesserung.

Es ist deshalb Aufgabe der Erfindung eine einfachere und kostengünstigere Art der Stromversorgung des leitungsseitigen Teils einer jeweiligen Sende- und Empfangsstation anzugeben.

Diese Aufgabe wird erfindungsgemäß mit den Merkmalen des Patentanspruchs 1 gelöst.

Im Gegensatz zur bekannten Art der Speisung des leitungsseitigen Teils ist bei Anwendung der Erfindung nur eine Stromversorgungseinrichtung erforderlich, die direkt mit der Speisespannung des Betriebsteils betrieben wird. Dabei ergibt sich ein besonders kostengünstiger Aufbau, weil ein Gleichstrom/Gleichstrom-Wandler mit einem Wandler-Übertrager verwendet wird, in dessen Primärkreis aus betriebsseitig anliegenden Gleichstrom-Versorgungsspannungen mittels einer Schwingschaltung eine Wechselspannung erzeugt wird, die auf der Sekundärseite des Wandler-Übertragers gleichgerichtet wird. Da die primärseitige Wechselspannung durch C-R-gekoppelte Ansteuerung eines Umkehrintegrators mit dessen eigener, mittels eines Umkehrverstärkers um 180° phasenverschobener Ausgangsspannung erzeugt wird, wirkt der Ausgang des Umkehrintegrators auf den Eingang des Umkehrverstärkers, der das Ausgangssignal des Umkehrintegrators invertiert. Der Ausgang des Umkehrverstärkers ist seinerseits über die C-R-Kopplung mit dem Eingang des Umkehrintegrators verbunden. Während der Umkehrintegrator in den Zeitintervallen, in denen seine Eingangsspannung eine andere Polarität als seine Ausgangsspannung hat, seine Integrationsrichtung beibehält, ändert der Umkehrintegrator seine Integrationsrichtung in den Zeitbereichen, in denen seine Eingangsspannung dieselbe Polarität wie seine Ausgangsspannung hat, so daß sich dadurch die Polarität seiner Ausgangsspannung ändert. Auf diese Weise wird am Ausgang des Umkehrintegrators eine stationäre selbsterhaltende Wechselspannung erzeugt.

Der Ausgang des Umkehrintegrators und der Ausgang des Umkehrverstärkers sind über die Primärwicklung des Wandler-Übertragers und einen Kondensator miteinander verbunden. Da die Ausgangswechselspannung des Umkehrverstärkers gegenüber der Ausgangswechselspannung des Umkehrintegrators um 180° phasenverschoben ist, ist die Wechselspannung, die an der Primärwicklung des Wandler-Übertragers anliegt erdsymmetrisch. Sie hat eine Amplitude, die der Summe der Absolutbeträge der Ausgangsspannungen des Umkehrintegrators und des Umkehrverstärkers entspricht. Hat beispielsweise der Umkehrverstärker den Verstärkungsfaktor -1, so hat die Wechselspannung an der Primärwicklung des Wandler-Übertragers die doppelte Amplitude der Ausgangswechselspannung des Umkehrintegrators. Durch diese Verdoppelung der Amplitude wird die Leistungsabgabe der Schwingschaltung vervierfacht.

Da der Umkehrintegrator und der Umkehrverstärker jeweils durch eine gegengekoppelte Operationsverstärkerschaltung realisiert sind, ergibt sich ein einfacher, billiger und platzsparender Aufbau der Schaltungsanordnung zur Erzeugung der primärseitigen Wechselspannung.

Es hat sich weiter als vorteilhaft erwiesen, wenn parallel zur Kapazität im Rückführzweig des als Umkehrintegrator beschalteten Operationsverstärkers zwei gegensinnig in Reihe geschaltete Zenerdioden vorgesehen sind. Durch sie wird die Amplitude der Ausgangswechselspannung des Umkehrintegrators für beide Polaritäten begrenzt. Diese primärseitige Wechselspannungsamplitudenbegrenzung kommt einer primärseitigen Wechselspannungsstabilisierung gleich. Es hat sich gezeigt, daß auf Grund dieser primärseitigen Wechselspannungsstabilisierung keine sekundärseitigen Stabilisierungsschaltungen mehr erforderlich sind. Da in einem System der hier betrachteten Art sowohl der Sender als auch der Empfänger jeweils mit einer positiven und negativen Spannung gespeist werden müssen, können auf diese Weise an jeder Sende- und Empfangsstation vier Stabilisierungsschaltungen eingespart werden. Die Signalformung und der symmetrische Betrieb der primärseitigen Wechselspannung hat weiter den Vorteil, daß der Gleichstrom/Gleichstrom-Wandler einen geringstmöglichen Anteil an Störsignalen erzeugt.

Es hat sich als vorteilhaft erwiesen, wenn der Umkehrverstärker mit einem externen Schaltungsanschluß verbunden ist. Vorzugsweise ist der externe Schaltungsanschluß über einen Eingangsbeschaltungswiderstand an den Umkehrverstärker geführt. Ein solcher externer Schaltungsanschluß bietet den Vorteil, daß ein definierter Bruchteil der Wechselspannung, die an der Primärwicklung des Wandler-Übertragers anliegt, gegen die Betriebserde gemessen werden kann. Weiter kann über diesen externen Schaltungsanschluß zum Spannungstoleranztest der an der Sekundärseite des Wandlers betriebenen Sende- und Empfangsschaltungen eine externe Wechselspannung niederohmig eingekoppelt werden, welche die auf Grund des Schaltungsaufbaus des Gleichstrom/Gleichstrom-Wandlers selbsterzeugte Ausgangsspannung zur Speisung des Senders und des Empfängers mit den beim Spannungstoleranztest geforderten Toleranzwerten überschreibt.

Es hat sich weiter als vorteilhaft erwiesen, wenn der Sender und der Empfänger jeweils über eine separate Sekundärwicklung des Wandler-Übertragers gespeist werden, denn auf diese Weise werden der Sender und der Empfänger voneinander unabhängig mit Spannung versorgt, so daß sich etwaige Störungen der Spannungsversorgung beispielsweise des Senders nicht auf die Spannungsversorgung des Empfängers auswirken. Ferner ist bei dieser Art der Spannungsversorgung moglich, durch unterschiedliche Wahl der Übersetzungsverhältnisse der Sekundärwicklungen für den Sender eine andere leitungsseite Versorgungsspannung bereitzustellen, als für den Empfänger.

Vorzugsweise werden die sekundärseitigen Wechselspannungen mittels in Basisschaltung betriebener Transitoren gleichgerichtet und mittels Siebkondensatoren gesiebt. Durch die Verwendung von Transistoren als Gleichrichter wird zusätzlich zur primärseitigen Wechselspannungsstabilisierung eine weitere Spannungsstabilisierung erreicht, da mit Transistoren im Vergleich zu Dioden eine niederohmigere und temperaturstabilere Gleichrichtung möglich ist, wodurch sich bei Lastschwankungen geringere Spannungsabfallschwankungen am Gleichrichter ergeben.

Ein Ausführungsbeispiel der Erfindung wir im folgenden an Hand der Figuren beschrieben. Es zeigen

Fig. 1 den Schaltplan eines galvanisch entkoppelten Gleichstrom/Gleichstrom-Wandlers zur Speisung eines Senders und eines Empfängers eines Signalübertragungssystems,

Fig. 2 den Spannungsverlauf $U_{A(UV)}$ am Ausgang 28 des Umkehrverstärkers 22 von Fig. 1,

Fig. 3 den Spannungsverlauf $U_{E(UI)}$ am Eingang 32 des Umkehrintegrators 20 von Fig. 1 und

Fig. 4 den Spannungsverlauf $U_{A(UI)}$ am Ausgang des Umkehrintegrators 20 von Fig. 1.

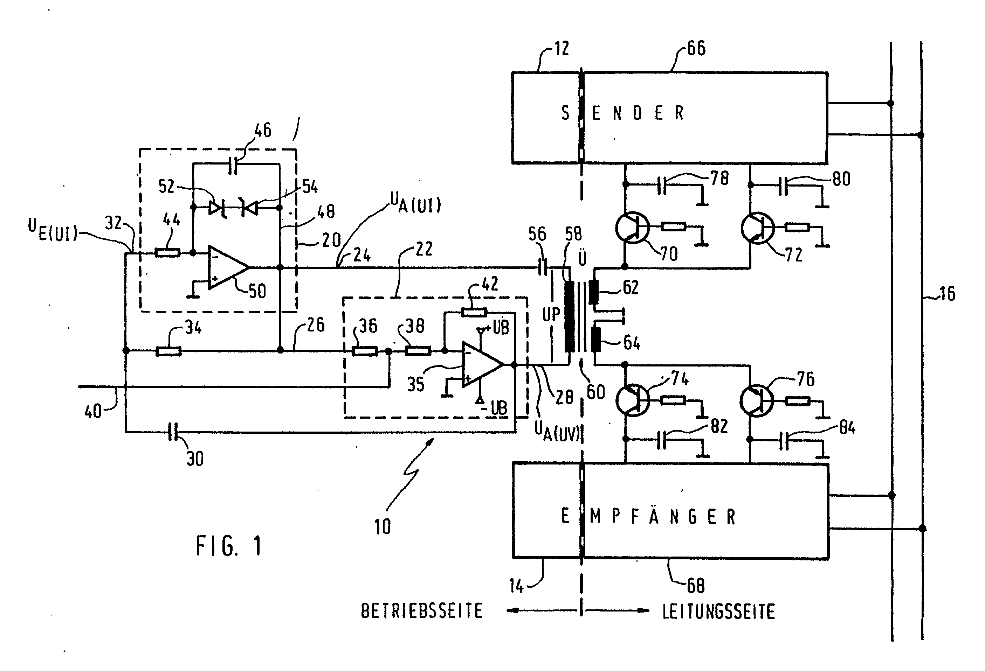

In Fig. 1 links von der gestrichelten vertikalen Linie ist die Betriebsseite eines Gleichstrom/Gleichstrom-Wandlers 10, eines Senders 12 und eines Empfängers 14 dargestellt. In der Figur rechts von der gestrichelten Linie ist analog die von der Betriebsseite galvanisch entkoppelte Leitungsseite des Gleichstrom/Gleichstrom-Wandlers 10, des Senders 12 und des Empfängers 14 zu erkennen. Sowohl der Sender 12 als auch der Empfänger 14 sind mit einer Übertragungsleitung 16 eines Signalübertragungssystems verbunden. Die Betriebsseite des Gleichstrom/Gleichstrom-Wandlers 10 stellt eine Schwingschaltung dar. Sie ist im wesentlichen aus einem Umkehrintegrator 20 und einem Umkehrverstärker 22 aufgebaut. Der Ausgang 24 des Umkehrintegrators 20 ist dabei mit dem Eingang 26 des Umkehrverstärkers 22 verbunden. Der Ausgang 28 des Umkehrverstärkers 22 ist über einen Kondensator 30 mit dem Eingang 32 des Umkehrintegrators 20 verbunden. Der Eingang 32 des Umkehrintegrators 20 ist weiter über einen Widerstand 34 mit dem Ausgang 24 des Umkehrintegrators 20 und somit mit dem Eingang 26 des Umkehrverstärkers 22 verbunden. Der Eingangsbeschaltungswiderstand des als Umkehrverstärker beschalteten Operationsverstärkers 35 setzt sich aus zwei in Reihe geschalteten Widerständen 36 und 38 zusammen. Am Verbindungspunkt der beiden Widerstände 36 und 38 ist ein externer Schaltungsanschluß 40 vorgesehen.

Der Umkehrverstärker 22 ist durch eine gegengekoppelte Operationsverstärkerschaltung mit dem Verstärkungsfaktor - 1 realisiert, so daß der Rückkopplungswiderstand 42 denselben Widerstandswert wie die Reihenschaltung der Widerstände 36 und 38 hat. Ebenso wie der Umkehrverstärker 22 ist auch der Umkehrintegrator 20 durch eine gegengekoppelte Operationsverstärkerschaltung realisiert. Der Eingangsbeschaltungswiderstand 44 und der Kondensator 46 im Rückführzweig des Operationsverstärkers 50 bestimmen zusammen die Integrationskonstante und somit die Flankensteilheit der zu erzeugenden Wechselspannung. Im Rückführzweig 48 sind weiter parallel zum Kondensator 46 zwei gegensinnig in Reihe geschaltete Zenerdioden 52 und 54 vorgesehen, die die Amplitude der zu erzeugenden Wechselspannung begrenzen, so daß sich eine trapezförmige amplitudenstabilisierte Signalform ergibt.

Der Ausgang 24 des Umkehrintegrators 20 ist über einen Kondensator 56 mit einem Pol der Primärwicklung des Wandler-Übertragers 60 verbunden. Deren zweiter Pol ist mit dem Ausgang 28 des Umkehrverstärkers 22 verbunden. Der Kondensator 56 dient dabei zur gleichstrommäßigen Entkopplung des Ausgangs 24 des Umkehrintegrators 20 vom Ausgang 28 des Umkehrverstärkers 22. Es wird dadurch ein bei Symmetriefehlern der Operationsverstärker 35 und 50 zwischen deren Ausgängen 24 und 28 auftretender Ausgleichsstrom vermieden. Durch den Wandler-Übertrager 60 wird die galvanische Entkopplung der Betriebsseite von der Leitungsseite vorgenommen. Er hat zwei separate Sekundärwicklungen 62 und 64, wobei der leitungsseitige Teil 66 des Senders 12 über eine erste Sekundärwicklung 62 und der leitungsseitige Teil 68 des Empfängers 14 über die zweite Sekundärwicklung 64 des Wandler-Übertragers 60 gespeist wird. Die sekundärseitigen Wechselspannungen werden schließlich mittels in Basisschaltung betriebener Transistoren 70, 72, 74 und 76 gleichgerichtet und mittels Siebkondensatoren 78, 80, 82 und 84 gesiebt.

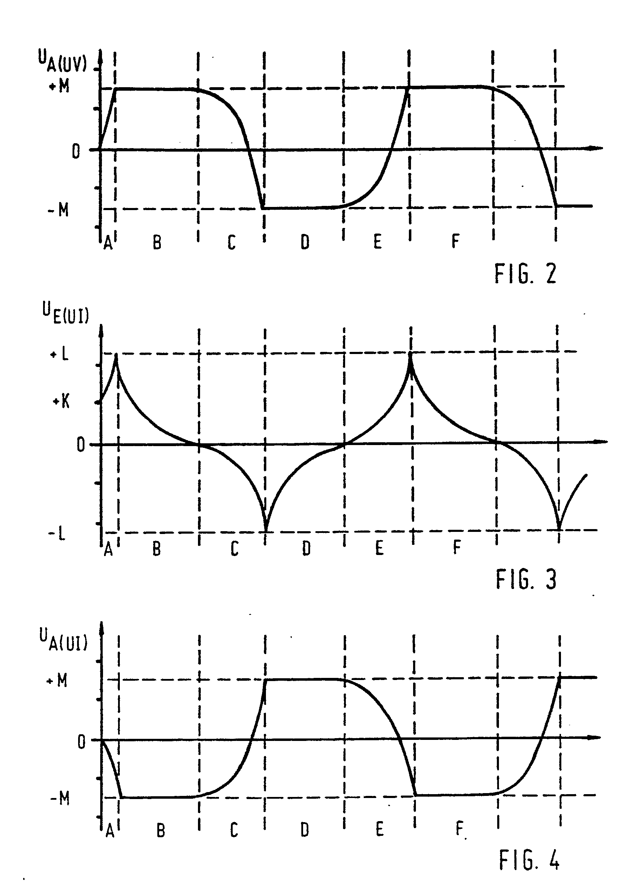

Im folgenden wird die Funktionsweise der betriebsseitigen Schwingschaltung des Gleichstrom/Gleichstrom-Wandlers 10 für den stationären Betriebsfall an Hand der Figuren 1 bis 4 erläutert. Dabei zeigt Fig. 2 den Spannungsverlauf $U_{A\,(UV)}$ am Ausgang 28 des Umkehrverstärkers 22, Fig. 3 den Spannungsverlauf $U_{E\,(UI)}$ am Eingang 32 des Umkehrintegrators 20 und Fig. 4 den Spannungsverlauf $U_{A\,(UI)}$ am Ausgang 24 des Umkehrintegrators 20.

Es wird davon ausgegangen, daß bereits eine trapezförmige Wechselspannung $U_{A\,(UI)}$ am Ausgang 24 des Umkehrintegrators 20 anliegt. Diese trapezförmige Wechselspannung $U_{A(UI)}$ wird durch den Umkehrverstärker 22 invertiert, so daß dessen trapezförmige Ausgangswechselspannung $U_{A\,(UV)}$ gegenüber der trapezförmigen Ausgangsspannung $U_{A\,(UI)}$ des Umkehrintegrators 20 um 180° phasenverschoben ist.

Zur Erzeugung bzw. Aufrechterhaltung der trapezförmigen Wechselspannung $U_{A(UI)}$ am Ausgang 24 des Umkehrintegrators 20 wird dessen Eingang 32 von der am Ausgang 28 des Umkehrverstärkers 22 anliegenden trapezförmigen Wechselspannung $U_{A(UV)}$ über die aus dem Kondensator 30 und dem Widerstand 34 bestehende C-R-Kopplung angesteuert. Diese stellt bezüglich des Eingangs 32 des Umkehrintegrators 20 einen RC-Hochpaß dar. Dies hat zur Folge, daß in dem Zeitintervall A, in dem die Ausgangsspannung $U_{A(UV)}$ des Umkehrverstärkers 22 einen Sprung macht, also beispielsweise mit einer ausreichend großen Flankensteilheit ansteigt (Ausgangssituation), die Ladung des Kondensators 30 nahezu unverändert bleibt. Die Eingangsspannung $U_{E(UI)}$ des Umkehrintegrators 20 steigt also demnach nahezu um denselben Betrag wie die Ausgangsspannung $U_{A(UV)}$ des Umkehrverstärkers 22 an. Da die Eingangsspannung $U_{E(UI)}$ des Umkehrintegrators 20 vor dem negativen Spannungssprung ($U_{A(UI)}$, Intervall A) am Ausgang 24 des Umkehrintegrators 20 und somit auch vor dem positiven Spannungssprung ($U_{A(UV)}$, Intervall A) am Ausgang 28 des Umkehrverstärkers 22 zur Einleitung des negativen Spannungssprungs ($U_{A(UI)}$, Intervall A) am Ausgang 24 des Umkehrintegrators 20 bereits einen positiven Ausgangswert +K hat, nimmt sie am Ende des positiven Spannungssprungs ($U_{A(UV)}$, Intervall A) am Ausgang 28 des Umkehrverstärkers 22 einen Wert +L an, der annähernd der Summe aus dem Ausgangswert +K und der Amplitude +M des positiven Spannungssprungs ($U_{A(UV)}$, Intervall A) entspricht.

Da die Eingangsspannung $U_{E(UI)}$ des Umkehrintegrators 20 ihre Polarität beim negativen Spannungssprung ($U_{A(UI)}$, Intervall A) an dessen Ausgang 24 nicht ändert, behält der Umkehrintegrator 20 zunächst seine Integrationsrichtung bei. Seine negative Ausgangsspannung $U_{A(UI)}$ wird jedoch durch die Zenerdiode 54 auf deren Durchbruchspannung begrenzt, so daß sie solange (Intervall B) einen konstanten negativen Wert -M annimmt, bis der Umkehrintegrator 20 durch Umpolung seiner Eingangsspannung $U_{E(UI)}$ (Übergang von Intervall B zu Intervall C), seine Integrationsrichtung ändert. Da der Umkehrverstärker 22 die Ausgangsspannung $U_{A(UI)}$ des Umkehrintegrators 20 nur invertiert, liegt für diesen Zeitraum (Intervall B) an seinem Ausgang 28 eine konstante positive Spannung +M an.

In diesem Zeitintervall B, in dem sowohl die Ausgangsspannung $U_{A(UI)}$ des Umkehrintegrators 20 als auch die Ausgangsspannung $U_{A(UV)}$ des Umkehrverstärkers 22 konstant ist, wird der Kondensator 30 über den Widerstand 34 umgeladen. Es wird dadurch erreicht, daß die zunächst positive Eingangsspannung $U_{E(UI)}$ des Umkehrintegrators 20 negativ wird, wodurch sich dessen Integrationsrichtung ändert. Die Änderung der Integrationsrichtung bewirkt wiederum, daß die Ausgangsspannung $U_{A(UI)}$ des Umkehrintegrators 20 sprunghaft ihre Polarität wechselt (Intervall C), so daß sich ein durch die zweite Zenerdiode 52 begrenzter konstanter positiver Spannungswert +M (Intervall D) einstellt. Die Ausgangsspannung $U_{A(UV)}$ des Umkehrverstärkers 22 ändert dadurch im Zeitintervall C ebenfalls sprunghaft ihre Polarität; sie nimmt einen konstanten negativen Spannungswert -M (Intervall D) an. Im Zeitintervall C, in dem die Ausgangsspannung $U_{A(UV)}$ des Umkehrverstärkers 22 den Sprung vom konstanten positiven Wert +M zum konstanten negativen Wert -M macht, bleibt die Ladung des Kondensators 30 weitgehend unverändert, so daß die Eingangsspannung $U_{E(UI)}$ des Umkehrintegrators 20 nahezu denselben Sprung ausführt, mit dem Ergebnis, daß sie am Ende des Spannungssprungs am Übergang von Intervall C zum Intervall D ihren maximalen negativen Wert -L annimmt.

In dem dem Spannungsprung folgenden Zeitintervall D, in dem die Ausgangsspannung $U_{A(UV)}$ des Umkehrverstärkers 22 einen konstanten negativen (-M) und die Ausgangsspannung $U_{A(UI)}$ des Umkehrintegrators 20 einen konstanten positiven Wert +M hat, wird der Kondensator 30 über den Widerstand 34 erneut umgeladen. Es wird dadurch erreicht, daß die zunächst negative Eingangsspannung $U_{E(UI)}$ des Umkehrintegrators 20 positiv wird, wodurch sich dessen Integrationsrichtung ändert. Die Änderung der Integrationsrichtung bewirkt wiederum, daß die Ausgangsspannung $U_{A(UI)}$ des Umkehrintegrators 20 im Zeitintervall E ihre Polarität wechselt, so daß sie von ihrem konstanten positiven Wert +M auf den durch die Zenerdiode 54 begrenzten konstanten negativen Wert -M springt. Da der Umkehrverstärker 22 die Ausgangsspannung $U_{A(UI)}$ des Umkehrintegrators 20 nur invertiert, springt die Ausgangsspannung $U_{A(UV)}$ des Umkehrverstärkers 22 gleichzeitig auf den entsprechenden konstanten positiven Wert +M, was der Ausgangssituation entspricht und wodurch der vorstehend beschriebene Zyklus zur Aufrechterhaltung der trapezförmigen Wechselspannung $U_{A(UI)}$ am Ausgang 24 des Umkehrintegrators 20 erneut beginnt.

Die Flankensteilheit der trapezförmigen Wechselspannung $U_{A(UI)}$ wird durch eine entsprechende Dimensionierung des Widerstandes 44 und des Kondensators 46 bestimmt. Die beiden gegensinnig in Reihe geschalteten Zenerdioden 52 und 54 im Rückführzweig 48 des Umkehrintegrators 20 begrenzen die Wechselspannung $U_{A(UI)}$ für beide Polaritäten und bewirken dadurch eine Amplitudenstabilisierung.

Da die Ausgangswechselspannung $U_{A(UI)}$ des Umkehrintegrators 20 gegenüber der Ausgangswechselspannung $U_{A(UV)}$ des Umkehrverstärkers 22 um $180^\circ$ phasenverschoben ist, hat die Wechselspannung, die an der Primärwicklung 58 des Wandler-Übertragers 60 anliegt, eine Amplitude, die der Summe der Absolutbeträge der Ausgangsspannungen des Umkehrintergrators 20 und des Umkehrverstärkers 22 entspricht.

## Patentansprüche

1.  Einrichtung zur Speisung von Sendern und Empfängern eines Signalübertragungssystems, dessen Übertragungsleitung mit einem leitungsseitigen Teil des jeweiligen Senders und Empfängers verbunden und von einer Betriebsseite galvanisch entkoppelt ist, **dadurch gekennzeichnet**, daß der leitungsseitige Teil (66, 68) des jeweiligen Senders (12) und des jeweiligen Empfängers (14) von der Betriebsseite aus über einen galvanisch entkoppelten Gleichstrom/Gleichstrom-Wandler (10) gespeist wird, dessen primärseitige Wechselspannung durch C-R-gekoppelte Ansteuerung eines Umkehrintegrators (20) mit dessen eigener, mittels eines Umkehrverstärkers (22) um $180^\circ$ phasenverschobener Ausgangsspannung erzeugt wird, daß der Ausgang (24) des Umkehrintegrators (20) und der Ausgang (28) des Umkehrverstärkers (22) über die Primärwicklung (58) des Wandler-Übertragers (60) und einen Kondensator (56) miteinander verbunden sind, und daß der Umkehrintegrator (20) und der Umkehrverstärker (22) jeweils durch eine gegengekoppelte Operationsverstärkerschaltung realisiert sind.

2.  Einrichtung nach Anspruch 1, dadurch **gekennzeichnet**, daß parallel zur Kapazität (46) im Rückführzweig (48) des als Umkehrintegrators (20) beschalteten Operationsverstärkers (50) zwei gegensinnig in Reihe geschaltete Zenerdioden (52, 54) vorgesehen sind.

3.  Einrichtung nach Anspruch 1 oder 2, dadurch **gekennzeichnet**, daß der Umkehrverstärker (22) mit einem externen Schaltungsanschluß (40) verbunden ist.

4.  Einrichtung nach Anspruch 3, dadurch **gekennzeichnet**, daß der externe Schaltungsanschluß (40) über einen Eingangsbeschaltungswiderstand (38) an den Umkehrverstärker (22) geführt ist.

5.  Einrichtung nach einem der Ansprüche 1 bis 4, dadurch **gekennzeichnet**, daß der Sender (12) und der Empfänger (14) jeweils über eine separate Sekundärwicklung (62, 64) des Wandler-Übertragers (60) gespeist sind.

6.  Einrichtung nach Anspruch 5, dadurch **gekennzeichnet**, daß die sekundärseitigen Wechselspannungen mittels in Basisschaltung betriebener Transistoren (70, 72, 74, 76) gleichgerichtet und mittels Siebkondensatoren (78, 80, 82, 84) gesiebt werden.

## Claims

1.  Feeding device for transmitters and receivers of a signal transmission system whose transmission line is connected to a line side portion of the respective transmitter and receiver and is electrically isolated from an operating side, **characterized** in that the line side portion (66, 68) of the respective transmitter (12) and of the respective receiver (14) is fed from the operating side via an electrically isolated DC/DC transducer (10) whose primary alternating voltage is generated by means of a CR-coupled control of an inverting integrator (20) with its own output voltage phase shifted by 180° by means of an inverting amplifier (22), and
that the output (24) of said inverting integrator (20) and the output (28) of said inverting amplifier (22) are interconnected via the primary winding (58) of the transducer transformer (60) and a capacitor (56), and
that said inverting integrator (20) and said inverting amplifier (22) are respectively realized by an operational amplifier circuit, having negative feedback.

2. Device according to claim 1, **characterized** in that parallel to the capacity (46) in the feedback circuit (48) of the operational amplifier (50) wired as an inverting integrator (20), two series opposed Zener-diodes (52, 54) are provided.

3. Device according to claim 1 or 2, **characterized** in that the inverting amplifier (22) is connected to an external terminal (40).

4. Device according to claim 3, **characterized** in that the external terminal (40) is connected to the inverting amplifier (22) via an input resistor (38).

5. Device according to anyone of claims 1 to 4, **characterized** in that the transmitter (12) and the receiver (14) are respectively fed via a separate secondary winding (62, 64) of the transducer transformer (60).

6. Device according to claim 5, **characterized** in that the secondary alternating voltages are rectified by transistors (70, 72, 74, 76) operated in a grounded-base circuit and are filtered by means of filter capacitors (78, 80, 82, 84).

**Revendications**

1. Dispositif destiné à alimenter des émetteurs et des récepteurs d'un système de transmission de signaux dont la ligne de transmission est reliée à une partie côté ligne de l'émetteur et du récepteur respectifs et est découplée galvaniquement d'un côté exploitation, caractérisé en ce que la partie côté ligne (66, 68) de l'émetteur (12) respectif et du récepteur (14) respectif est alimentée, à partir du côté exploitation, par un convertisseur continu-continu (10) découplé galvaniquement, dont la tension alternative du côté primaire est produite par excitation à couplage C-R d'un intégrateur-inverseur (20) avec sa propre tension de sortie, déphasée de 180° au moyen d'un amplificateur inverseur (22), en ce que la sortie (24) de l'intégrateur-inverseur (20) et la sortie (28) de l'amplificateur inverseur (22) sont reliées entre elles par l'enroulement primaire (58) du convertisseur-translateur (60) et un condensateur (56), et en ce que l'intégrateur-inverseur (20) et l'amplificateur inverseur (22) sont réalisés chacun par un circuit amplificateur d'opération de contre-réaction.

2. Dispositif selon la revendication 1, caractérisé en ce qu'il est prévu, en parallèle avec la capacité (46) dans la branche de retour (48) de l'amplificateur d'opération (50) monté comme intégrateur-inverseur (20), deux diodes de Zener (52, 54), montées en série en sens contraire.

3. Dispositif selon la revendication 1 ou 2, caractérisé en ce que l'amplificateur inverseur (22) est relié à un branchement de circuit externe (40).

4. Dispositif selon la revendication 3, caractérisé en ce que le branchement de circuit externe (40) est relié à l'amplificateur inverseur (22) par l'intermédiaire d'une résistance d'entrée de câblage (38).

5. Dispositif selon l'une des revendications 1 à 4, caractérisé en ce que l'émetteur (12) et le récepteur (14) sont alimentés chacun par l'intermédiaire d'un enroulement secondaire séparé (62, 64) du convertisseur-translateur (60).

6. Dispositif selon la revendication 5, caractérisé en ce que les tensions alternatives du côté secondaire sont redressées au moyen de transistors (70, 72, 74, 76), opérant en circuit de base, et filtrées au moyen de condensateurs de filtrage (78, 80, 82, 84).

FIG. 1

FIG. 2

FIG. 3

FIG. 4